# EUROPEAN PATENT APPLICATION

(11) **EP 1 731 985 A1**
(43) Date of publication of application: **13.12.2006**
(21) Application number: 05012113.6
(22) Date of filing: 06.06.2005
(51) Int. Cl.: G06F 1/08

(54) **A circuit for clock switching in clocked electronic devices and method therefor**

(71) Applicant: STMicroelectronics S.r.l., 20041 Agrate Brianza (Milano) (IT)
(72) Inventor: Mari, Ugo, 95030 Tremestieri (Catania) (IT); Adamo, Santi Carlo, 95030 Gravina di Catania (Catania) (IT); Critelli, Rosalino, 95045 Misterbianco (Catania) (IT); Inglese, Alessandro, 95037 San Giovanni La Punta (Catania) (IT)
(74) Representative: Bosotti, Luciano

(57) **Abstract**

A circuit for clock switching in clocked electronic devices between at least a first clock signal (CK0) and a second clock signal (CK1), providing respective parallel branches (B0, B1) for such at least first clock signal (CK0) and second clock signal (CK1) and comprising a clock gating stage (ST1; CG) and further comprising, upstream said clock gating stage (ST1; CG), at least a synchronizer stage (ST2; SY) and a selection module (SN; MUX0, MUX1), said parallel branches (B0 B1) being connected in a ring configuration, said selection module being configured for selecting different paths in said ring in order to perform said clock switch upon receiving a clock selection signal (CKSEL).

The selector module (MUX0, MUX1) is placed downstream said synchronizer stage (SY).

Preferred application is in multi-frequency microcontrollers.

## Description

### Field of the invention

The present invention relates to clock switching techniques, for instance for microcontrollers.

The invention was developed by paying specific attention to the possible application to clock switching during operation in microcontrollers where different clock signals are available.

### Description of the related art

An increasing number of the microcontrollers in use nowadays exploits multi-frequency clocks that are necessary to switch the source of a clock line while the device is running. The frequencies of the two clock signals between which the switching is operated can be totally unrelated to each other or they may be multiples one with respect to the other, but in either case the risk of having a glitch on the clock line is present. A glitch on the clock line is dangerous to the whole microcontroller, as it could be interpreted as a capture clock edge by some of the registers in the microcontroller and missed by other register.

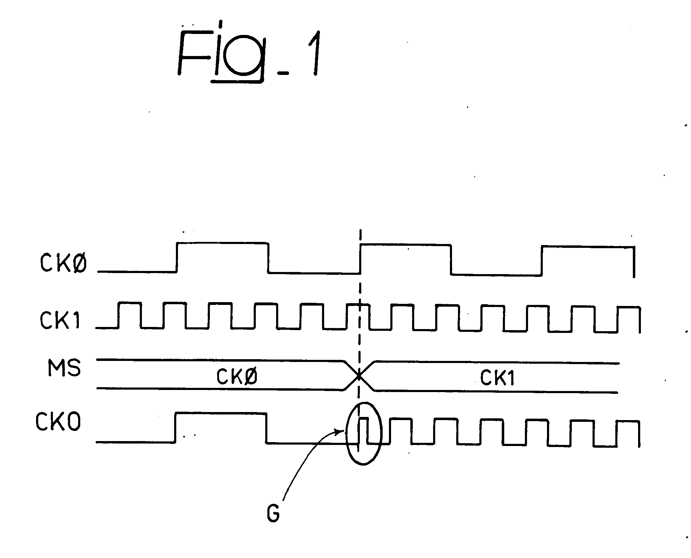

In Figure 1 it is shown a time diagram representing signals in a switch operation that can be obtained by using a simple multiplexer.

A first clock signal CK0, at a first frequency and a second clock signal CK1 at a second frequency higher than the first frequency are shown. A selector signal MS, operating as control signal on the multiplexer, is also shown. The selector signal MS, for instance, either propagates the first clock signal CK1 to the clock output CKO when is set to logical zero level or propagates the second clock signal CK1 to a clock output CKO when is set logical one level. A glitch G may be caused due to immediate switching of the clock output CKO from the first clock signal CK1, when the value of the selector signal MS changes.

In the case of unrelated clock sources glitch protection can be attained if the clock switch is obtained with the use of synchronizer circuits, in order to avoid potential metastability caused by asynchronous signals. A synchronizer circuit usually includes simply two stages of flip flops where the first stage helps stabilize data by latching such data and later passing the data on to the next stage to be interpreted by the rest of the circuit.

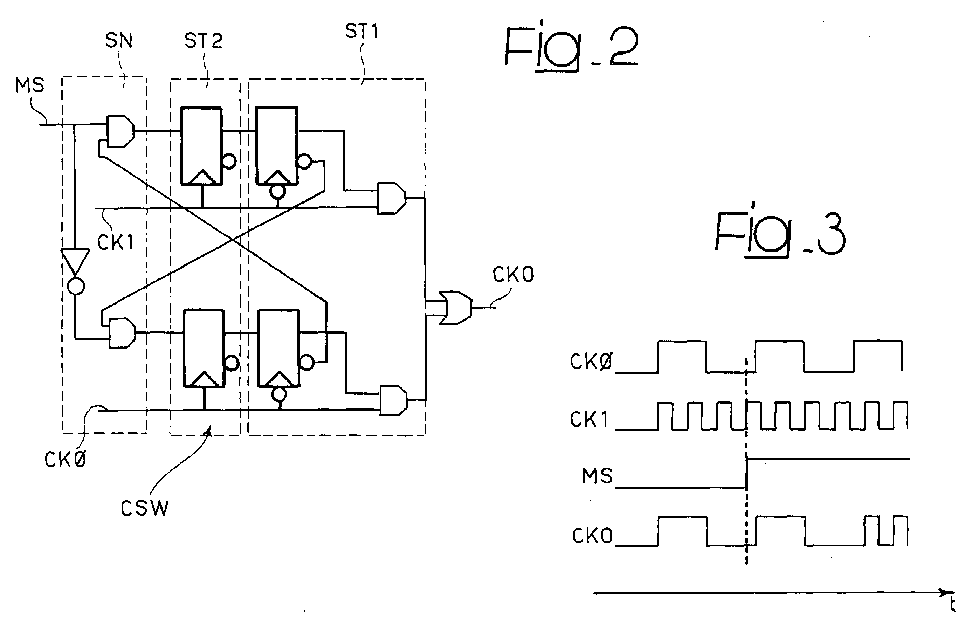

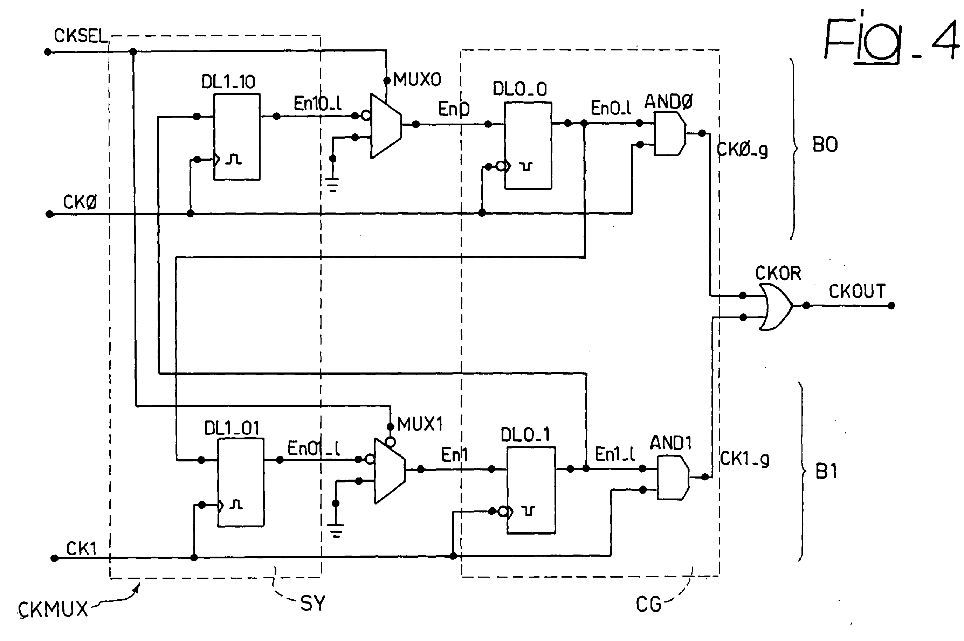

By way of example, in Figure 2 a circuit for clock switching CSW according to the prior art is shown where protection against meta-stability is provided by a multiplexer arrangement, that comprises a normal stage ST1, including, for each of the clock signals CK0 and CK1, negative edge triggered flip-flops and a logic AND gate for clock selection. Clock selection is performed by applying to the clock signals a gating function, i.e. the clock signal is passed through a logic gate and for certain values of the input that is controlled by the latch the output of the gate replicates the clock signal, while for other values the output is fixed to a level, preferably low logical level. The circuit for clock switching CSW includes also an extra stage ST2, placed upstream the normal stage ST1 and comprising positive edge triggered flip flops. Thus the stages ST2 and ST1 embody a synchronizer circuit. A selection network SN is provided upstream the extra stage ST2, enabling by suitable AND gates the path corresponding to clock signals CK0 or CK1 respectively. The positive edge triggered flip-flop in each of the selection paths for the clock signals CK0 and CK1, along with negative edge triggered flip-flop belonging to the normal stage ST1 guard against potential meta-stability which may be caused by asynchronous selector signal MS or asynchronous feedback from one clock domain to the other. A time diagram of the signals issued in the circuit of Figure 2 is shown in Figure 3.

The circuit of Figure 2 does not allow a fast clock switch and further presents the limitation that the switching control therein is performed starting from a clock signal, which can be an external clock, thus it can be stopped due to a fault, so the function of the switch circuit will be interrupted. In order to avoid this kind of problem a further clock detection circuit is needed, that monitors the availability of current clock source. The circuit according to the proposed solution advantageously is not bound to starting from one clock signal, which can be an external clock that can be stopped due to a fault, thus no extra circuits are needed for safe clock switch.

### Object and summary of the invention

The object of the present invention is thus to provide an improved arrangement dispensing with the drawbacks of the prior art arrangements considered in the foregoing, proposing a circuit for clock switching in microcontrollers performing a fast operation and safely ensuring a glitch free output protected from metastability.

According to the present invention, that object is achieved by means of a circuit having the features set forth in the claims that follow. The invention also relates to a corresponding method.

A preferred embodiment of the invention is thus a circuit for performing a two way clock-multiplexing procedure, and, also, digital frequency modulation. The two input clock signals are uncorrelated and driven to the output by the selector input. Transition of the clock-selector can be asynchronous with respect to both inputs.

### Brief description of the annexed drawings

The invention will now be described, by way of example only, by referring to the enclosed figures of drawing, wherein:
- Figure 1, Figure 2 and Figure 3 have been already described in the foregoing;
- in Figure 4 a circuit for clock switching according the invention is shown;
- in Figure 5 a time diagram of signals issued in the circuit of Figure 4 is shown;

### Detailed description of a preferred embodiment of the invention

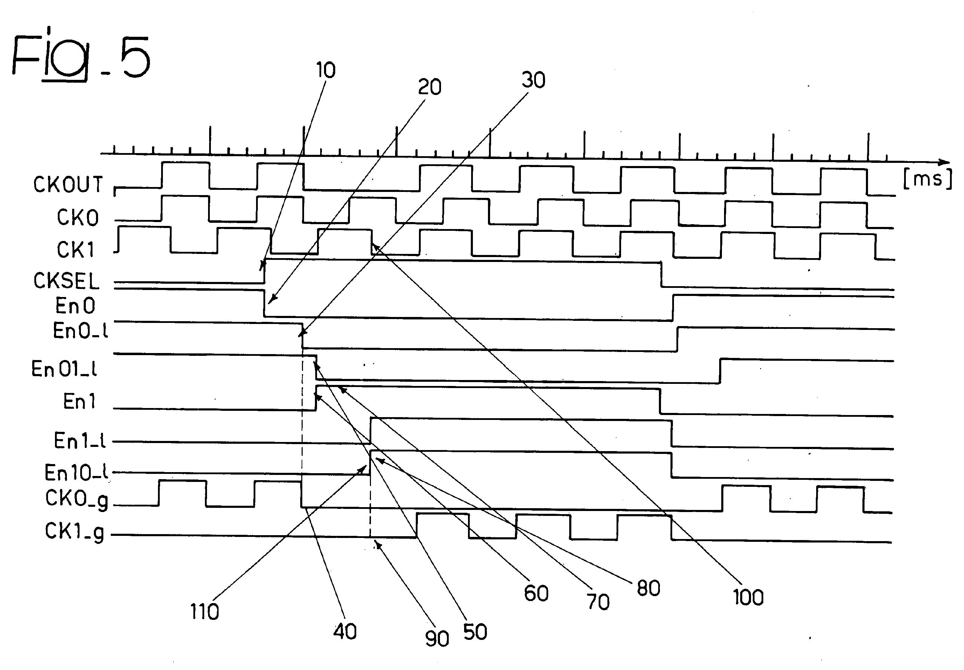

In figure 4 it is shown a circuit for clock switching, indicated as a whole with the reference CKMUX, that includes substantially a bi-stable ring that is suitable for closing through two different paths according the type of transition, rising or falling, of a selection signal CKSEL.

Such a circuit CKMUX comprises a first branch B0 pertaining the first clock signal CK0 and a second branch B1 pertaining the second clock signal CK1.

The first branch B0 comprise a first latch, in particular a delay D-flip flop, DL1_10, receiving at its clock input the first clock signal CK0 and supplying at its output a first latched signal En10_l to the inverting input of a two-inputs multiplexer MUX0, that has its other input connected to the ground. Such a multiplexer MUX0 receives at a control input as control signal the selection signal CKSEL and supplies at its output a selected signal En0 to an input of a second latch DL0_0, also clocked by the first clock signal CK0. Such second latch DL0_0 outputs a second latched signal En0_1, that is supplied as input to a logic gate AND0, performing a logical AND function between its two inputs, together with such first clock signal CK0. The logic gate AND0 outputs a first output waveform CK0_g.

The second branch B1 comprises, disposed in a way similar to the disposition of elements in branch B0, a third latch DL1_01 outputting a third latched signal En01_l, a second multiplexer MUX1 outputting a second selected signal En1, a fourth latch DL0_1 outputting a second latched signal En1_l and a logic gate AND1, also implementing a logic AND function, outputting a second output waveform CK1_g. The second branch B1 is clocked by the second signal CK1.

Finally, the first output waveform CK1_g and second output waveform CK0_g are supplied to the two inputs of a logical gate CKOR implementing the logical OR function on such waveforms for supplying at its output the output clock signal CKOUT.

The second latched signal EN0_1 outputted by the second latch DL0_0 in the first branch B0 is fed back to the input of the third latch DL1_01 in the second branch B1, while in an analogous way the fourth latched signal EN1_1 outputted by the fourth latch DL0_1 in the second branch B1 is fed back to the input of the first latch DL0_01 in the first branch B0.

The bi-stable ring represented from the above elements in branches B0 and B1, as mentioned, closes through two different paths in dependence of the transition of the selection signal CKSEL.

A first path:
En0->En0_l->En01_l->En1->En1_l->En10_l
is followed after the rising transition of the selection signal CKSEL.

A second path:
En1->En1 1->En10 1->En0->En0_1->En01_1
is followed after a falling transition of the selection signal CKSEL.

The fundamental block used for switch operations is the standard clock-gating cell embedded inside of the bi-stable ring. Its basic structure, indicated as a whole with reference CG in figure 4, comprises the low-level-transparent latch represented by the second latch DL0_0 plus the AND gate AND0 or the fourth latch DL0_0 plus the AND gate AND1 preserving the output waveforms CKO_g, CK1_g during on/off switching.

The latch DL1_01 filters an eventual glitch present after the rising transition of the selection signal CKSEL, while the latch DL1_10 filters an eventual glitch after the falling transition of the selection signal CKSEL. The latches DL1_01 an DL1_10 thus are part of a synchronizer stage SY.

Turning now to a static analysis of the circuit for clock switch CKMUX shown in Figure 4, it is first examined the bistable ring in static condition assuming that the selection signal CKSEL is fixed to the zero logical level.

In such a condition the second selected signal En1 at the output of the second multiplexer MUX1 is at low logical level because it is connected to ground level by the low value of the selection signal CKSEL. The second selected signal Enl propagates through the fourth latch DL0_1 to become the fourth latched signal En1_l. Thus, the fourth latched signal En1_l is low and the first clock signal CK1 is gated, i.e. the second output waveform CK1_g is fixed at low logical level, or logical zero.

The fourth latched signal En1_l propagates through the first latch DL1_10 onto the first latched signal En10_l that represents the input of the first multiplexer MUX0.

The first selected signal En0 at the output of such first multiplexer MUX0 is at high logical level because it is connected to the inverted first latched signal En10_l by the selection signal CKSEL at low logical level. En0 propagates through the second latch DL0_0 onto the second latched signal En0_l. Thus the second latched signal En0_l is high and the first clock signal CKO is not gated: the first waveform CKO_g replicates the first clock signal CKO.

The second latched signal En0_l propagates through the third latch DL1_01 to become the third latched signal En01_l, that is one of the two inputs of the second multiplexer MUX1. At such second multiplexer MUX1 propagation through the ring is stopped by the zero logical value of the selection signal CKSEL.

In conclusion, the second output waveform CK1_g is fixed at zero logical level by the fourth latched signal En1_l being at zero logical level and the first output waveform CK0_g is connected to the first clock signal CK0 by the high logical value assumed by the second latched signal En0_l. The output clock signal CKOUT is then connected to the output waveform CK1_g, i.e. the ungated first clock signal CK1 by means of the gate CKOR applying an OR function on CK0_g and CK1_g.

The same complementary analysis can be applied, due to circuit symmetry, for the static condition associated to the high logical value of the selection signal CKSEL.

For what concerns the dynamic analysis, assuming now that the transition of the selection signal CKSEL happens from low to high logical level, driving the switch operation from the first clock signal CK0 to the second clock signal CK1, in the following will be described the sequential steps through the first path En0->En10_l , that lead to linking the output clock signal CKOUT the second clock signal CK1 present at the input of the circuit for clock switch CKMUX. The steps performed for the switching are also indicated with arrows in the time diagram shown in Figure 5 representing the waveforms produced in the circuit CKMUX.

In Figure 5 the first clock signal CK0 has a period of 0.1 microseconds.

In a step 100 the transition of the selection signal CKSEL from zero to one logical level is commanded by the user or by the microprocessor.

In a step 20 switch of the first selected signal En0 to ground level occurs as consequence of selection signal CKSEL at one logical level on first multiplexer MUX0.

In a step 30, if the first clock signal CK0 is low the first selected signal En0 quickly propagates to the second latched signal En0_1 through the second latch DL0_0 that is transparent for logical low signals. It has to be considered that, if the transition of the selection signal CKSEL occurs while the first clock signal CK0 is high, the output clock signal CKO cannot be soon turned down before the first clock signal CKO is low too. In fact 0-1-0 glitch-type may occur or anyway the output waveform would be altered in such a case. For this reason the latch DL0_0 is provided, that propagates the signal En0 onto the latched signal En0_l only after the first clock signal CK0 falling edge.

If the first selected signal En0, that is the input of the second latch DL0_0 changes on the rising edge of the first clock signal CK0, metastability may arise on the second latched signal En0_l. However, usually the selecting transition is generated when the output clock signal CKOUT coincides with the second clock signal CK1 rising edge itself. In this case the selecting transition always occurs after the rising edge of the second clock signal CK1.

Otherwise, if the selecting transition has to be fully asynchronous, a further high-level-transparent D-flip flop can be added as synchronizer of the second latch DL0_0. This additional latch will be affected by metastability showing on the falling edge of the first clock signal CKO, but the meta-stable output shall not affect the first output waveform CKO_g in virtue of the presence of the logical gate ANDO.

In a step 40, the first waveform CKO_g is gated by the second latched En0_l at zero logical level. The output clock signal CKOUT is fixed low.

In a step 50, if the first clock signal CK1 is high then the second latched signal En0_1 soon propagates to the third latched signal En01_1 through the third latch DL1_01 that is transparent for high logical level signal.

If the first clock signal CK1 is logical zero the enabling signal for gating the first clock signal CK1 cannot be soon delivered, because in case the next rising edge of the first clock signal CK1 is coming too early an 1-0-1 glitch-type could show up onto the output waveform. Then the third latch DL1_01 propagates the second latched signal En0_1 onto the third latched signal En01_1 only after the rising edge of first clock signal CK1.

If the second latched signal En0_l changes on the rising edge of the first clock signal CK1, the third latch DL1_01 is transparent and not affected by metastability.

If second latched signal En0_l changes on the falling edge of the first clock signal CK1, the second latched signal En0_l may get metastability, but this is filtered with respect to the second waveform CK1_g by the gate ANDl, which is forced low by the same falling transition of the first clock signal CK1.

Moreover the third latch DL1_01 works as synchronizer for the next fourth latch DL0_1 latch.

In a step 60, the second latched signal En0_l is inverted and propagated through the second multiplexer MUX1, since the value of the selection signal CKSEL is logical one.

In a step 70, the second selected signal En1 switches thus to logical one.

In a step 80, if the first logical signal CK1 is logical zero the second selected signal En1 soon propagates to the fourth latched signal En1_l.

If the first waveform CKO_g was gated while the second clock signal CK1 was at logical one and the third latch DL1_01 is transparent, the second selected signal En1 cannot be quickly propagated to the fourth latched signal En1_l. In fact 0-1-0 glitch type may occur or anyway waveform of the second clock signal CK1 would be altered in this case. Thus the second latch DL0_1 propagates the second selected signal En1 onto the fourth latched signal En1_1 only after the second clock signal CK1 rising edge.

The second latch DL0_1 is protected against metastability by the first latch D1_01 operating as synchronizer.

In a step 90 then the second output waveform CK1_g is ungated by the fourth latched signal En1_l being at logical one and linked to the output clock signal CKOUT.

In a step 100, the fourth latched signal En1_1 propagates through the third latch DL1_10 on the next falling edge of the second clock signal CK1.

In a step 110, finally, the first latched signal En10_1 is high and propagation through the ring is stopped at the first multiplexer MUX0 by the high logical value of the selection signal CKSEL.

The analysis of the case of the falling transition of the selection signal CKSEL is complementary, due to circuit symmetry, and triggers the similar sequential steps through the second En1->En01_l path.

Now a comparison with the circuit for clock switching CSW of Figure 2 will be presented in order to highlight some of the advantages of the proposed solution.

The passage from the selecting transition taking place at the selecting stage, i.e. the multiplexers) to the deactivation of the first clock signal CK0, in the case that the selecting signal S is generated by the same output clock (e.g. CKOUT = CK0 determines the selection signal S passing from zero to one) is performed in a quicker way.

With reference to the circuit CSW shown in Figure 2, after the switch of the selector signal MS on the edge of the output signal CKO it is necessary to wait a whole clock cycle due to the synchronizing extra stage ST2 and another half cycle for the subsequent gating at the normal stage ST1 in order to switch off the first clock signal CK0 and switch on the second clock signal CK1. On the other hand in the circuit CKMUX according o the invention, since the selecting stage comprising the multiplexers MUX0 and MUX1 is placed upstream the gating stage CG, in order to perform the same operation it is needed only to wait half clock cycle, that is necessary for the gating in the second latch DL0_0. Thus, with respect to the circuit CSW of Figure 2, a whole clock cycle is spared in the operation of deactivating the old clock.

Furthermore, in a second case, if the selector signal MS is generated asynchronous, the circuit CSW shown in Figure 2 requires, after the switch of the selector signal MS, in the worst case, to wait a whole clock cycle due to the synchronizing extra stage ST2 and another half cycle for the subsequent gating at the normal stage ST1 in order to switch off the first clock signal CK0 and switch on the second clock signal CK1.

With the circuit CKMUX of the invention, as mentioned, in this case it is necessary to add two synchronizing transparent D-latches on the high logical level path of the selecting signal, i.e. each of such two additional synchronizing transparent D-latches receives the selection signal CKSEL at the input and feeds respectively its output to the control input of the first multiplexer MUX0 or to the control input of the second multiplexer MUX1. The additional synchronizing D-latch feeding the first multiplexer MUX0 is clocked by the first clock signal CK0, while the other additional synchronizing D-latch feeding the second multiplexer MUX1 is clocked by the second clock signal CK1. Therefore, if, when the selection signal CKSEL passes from low to high logical level, the output clock signal CKOUT is high, it is possible to pass directly to the clock gating, thus sparing a clock cycle with respect to the circuit CSW of Figure 2. If, when the selecting signal CKSEL passes from low to high logical level, the output signal CKOUT is low, the circuit CSW of Figure 2 and the circuit CKMUX are equivalent. In summary, the circuit CKMUX according to the invention allows for sparing on average (operating at a duty cycle of 50%) half clock cycle for the gating of the old clock signal.

In a third case, when passing from the deactivation of the old clock signal, i.e. the first signal CK0, to the activation of the new signal, i.e. the second signal CK1, the circuit CSW of Figure 2, after the clock gating in the normal stage ST1 of the old clock signal, needs to wait, in the worst case, a whole clock cycle, because of the presence of the synchronizer extra stage ST2, plus another half cycle for the subsequent release of the clock gating stage ST1 and switch completion.

In the circuit CKMUX according to the invention, if, when the clock gating takes place at the clock gating stage CG, e.g. if the selected signal En0_goes low, the second clock signal CK1 is high, it is possible to pass directly to the clock gate to activate the new clock, sparing a clock cycle with respect to Figure 2. If, on the other hand, the second clock signal CK1 is low, the two circuits are equivalent. In summary, the circuit CKMUX according to the invention allows for sparing, on average (duty cycle of 50%), half clock cycle for the gating of the old clock signal for passing from the deactivation of the old clock to activation of the new clock.

Thus, summarizing with respect to the three cases above detailed, the circuit according to the invention allows for sparing, on average, always one clock cycle and a half, with the addition of another half cycle if the selecting signal is synchronous with the output clock signal, as it is usual in synchronous systems. Otherwise, a clock cycle is spared on average.

Such an advantage in term of clock cycles is due to the placement of the multiplexers just upstream the clock gating stage and also to the use of simple delay latches transparent for low logical level signals.

A further comparison between the circuit CSW of Figure 2 and the circuit CKMUX according to the invention can performed, observing that the circuit shown in Figure 2 needs that both the first clock signal CK0 and the second signal CK1 are active, in order to pass from one stable state to the other. Indeed the circuit CSW requires a series of four edges, two of the old clock, i.e. CK0, and two of the new clock, i.e. CK1. If the starting clock, in this case CK0, is not working, due for instance to some fault that has occurred, the circuit CSW is blocked without any possibility to switch on the other clocks signal, even if the selector signal MS is switched.

The circuit CKMUX according to the invention, in the case that the selection signal S is generated by the same output clock signal, as it is usual, is always able to supply an output that is reliable with respect to the value assumed by the selection signal S, independently from the presence or not of a clock signal at the input. This is obtained thanks to the placement of the multiplexers embodying the selection stage just upstream of the clock gating stage and thanks to the transparency to the low logical level of the clock gating stage, i.e. the clock being switched off on the low logical level.

The proposed circuit and method thus show several advantages.

The proposed circuit is a fully digital circuit, that ensures a glitch-free output, that is meta-stability protected by the presence of the synchronizer stage of latches.

The proposed circuit ensures a very fast switching between clock signals, suitable for advanced microcontrollers where are needed high performances, since one cycle of the switching clock is the worst case. This is obtained in particular by placing the selection network represented by the two input multiplexer just upstream of the clock gating stage and downstream the synchronizer stage. The proposed solution is particularly suitable for advanced microcontrollers where are needed high performances. The technique above described is fully scalable and can be extended to a clock switch for more than two clocks.

Another remarkable advantage of the proposed circuit is that it is able to switch to the new clock source also if the current microcontroller clock source is not available due to a fault.

Of course, without prejudice to the underlying principle of the invention, the details and embodiments may vary, also significantly, with respect to what has been described and shown by way of example only, without departing from the scope of the invention as defined by the annexed claims.

## Claims

1. A circuit for clock switching in clocked electronic devices between at least a first clock signal (CK0) and a second clock signal (CK1), providing respective parallel branches (B0, B1) for said at least first clock signal (CK0) and second clock signal (CK1) and comprising a clock gating stage (ST1; CG) and further comprising, upstream said clock gating stage (ST1; CG), at least a synchronizer stage (ST2; SY) and a selection module (SN; MUX0, MUX1), said parallel branches (B0 B1) being connected in a ring configuration, said selection module (MUX0, MUX1) being configured for selecting different paths in said ring in order to perform said clock switch upon receiving a clock selection signal (CKSEL), **characterized in that**
said selector module (MUX0, MUX1) is placed downstream said synchronizer stage (SY).

2. The circuit of claim 1, **characterised in that** said selection module (MUX0, MUX1) outputs for each branch (B0, B1) a selected signal (En0, En1) inputting said clock gating stage (CG).

3. The circuit of claim 2, **characterised in that** said clock gating stage (CG) comprises for each branch (B0, B1) a latch (DL0_0, DL0_1) transparent to a specified logical level receiving said selected signal, said latch (DL0_0, DL0_1) having an output connected to a logical AND gate (AND0, AND1) that receives also as input the corresponding between said first clock signal (CK0) and second clock signal (CK1).

4. The circuit of either of claim 3, **characterised in that** the output of said latch (DL0_0, DL0_1) transparent to a specified logical level in one of said parallel branches (B1, B2) is connected to the input of said synchronizer stage (SY) in the other of said parallel branches (B1, B2).

5. The circuit of claim 4, **characterised in that** said selection module (MUX0, MUX1) for each branch comprises a two input multiplexer having an input kept at a fixed logical level.

6. The circuit of claim 5, **characterised in that** said two input multiplexer (MUX0, MUX1) receives a signal (En10_1, En01_1) outputted from said synchronizer stage (SY) at an inverting input.

7. The circuit of at least one of claims 1 to 6, **characterized in that** said synchronizer stage (SY) comprises positive edge triggered latches (DL) and said latch (DL0_0, DL0_1) is transparent to a specified logical level is a negative edge triggered latch.

8. The circuit of at least one of the claims from 1 to 7, **characterized in that** said selection module (MUX0, MUX1) comprise control inputs receiving said selection signal (CKSEL) through further synchronizer delay latches.

9. The circuit of at least one of the claims from 1 to 8, **characterised in that** comprises a logical element (CKOR) configured for performing an OR function and receiving as input the output waveforms (CK0_g, CK_1g) of the clock gating stage (CG) for each branch (B0, B1).

10. The circuit of at least one of the claims from 1 to 9, **characterised in that** said clocked device is a microcontroller.

11. The circuit of at least one of the claims from 1 to 10 **characterized in that** said specified logical level and said fixed logical level are logical zero.

12. A method for clock switching in clocked electronic devices between at least a first clock signal (CK0) and a second clock signal (CK1) that comprises the operation of associating said at least first clock signal (CK0) and second clock signal (CK1) to respective parallel branches (B0, B1), and
providing in said parallel branches (B0, B1), connected in a ring configuration, a clock gating stage (ST1; CG); and
further providing, upstream said clock gating stage (ST1; CG), at least a synchronizer stage (ST2; SY),
selecting (SN; MUX0, MUX1) different paths in said ring in order to perform said clock switch (90) upon receiving (10) a clock selection signal (CKSEL), **characterized in that** said operation of selecting (SN; MUX0, MUX1) comprises operating said selection in function of said clock selection signal (CKSEL) on the output signal (En10_1, En01_1) of said synchronizer stage (ST2; SY).
